**Europäisches Patentamt**

**European Patent Office**

**Office européen des brevets**

(19)

(11) Numéro de publication : **0 389 324 B1**

(12) **FASCICULE DE BREVET EUROPEEN**

(45) Date de publication du fascicule du brevet :
**16.12.92 Bulletin 92/51**

(51) Int. Cl.⁵ : **F16D 23/06**

(21) Numéro de dépôt : **90400589.9**

(22) Date de dépôt : **02.03.90**

(54) **Synchroniseur et procédé de montage d'un tel synchroniseur.**

(30) Priorité : **23.03.89 FR 8903853**

(43) Date de publication de la demande :
**26.09.90 Bulletin 90/39**

(45) Mention de la délivrance du brevet :
**16.12.92 Bulletin 92/51**

(84) Etats contractants désignés :
**DE GB IT**

(56) Documents cités :
**FR-A- 2 119 242**
**FR-A- 2 408 762**
**GB-A- 1 113 413**
**US-A- 2 354 526**

(73) Titulaire : **AUTOMOBILES PEUGEOT**
**75, avenue de la Grande Armée**
**F-75116 Paris (FR)**
Titulaire : **AUTOMOBILES CITROEN**
**62 Boulevard Victor-Hugo**
**F-92200 Neuilly-sur-Seine (FR)**

(72) Inventeur : **Chretien, Philippe**
**32, rue du Professeur Guyon**
**F-78430 Louveciennes (FR)**
Inventeur : **Marie, Daniel**
**17 bis, rue François Villon**
**F-95430 Auvers sur Oise (FR)**

(74) Mandataire : **Kohn, Philippe et al**
**c/o CABINET LAVOIX 2, place d'Estienne**
**d'Orves**
**F-75441 Paris Cédex 09 (FR)**

EP 0 389 324 B1

Jouve, 18, rue Saint-Denis, 75001 PARIS

**Description**

La présente invention est relative à un synchroniseur pour un pignon monté libre en rotation sur un arbre et auquel est liée en rotation une douille tronconique coaxiale dont les surfaces tronconiques externe et interne sont respectivement reçues entre une bague de friction extérieure et une bague de friction intérieure concentriques et liées en rotation à un moyeu de crabotage fixé à l'arbre et sur lequel est monté coulissant axialement un manchon de commande susceptible de coopérer avec la bague de friction extérieure pour la déplacer axialement par rapport à la bague de friction intérieure de manière à pincer la douille pour entraîner cette dernière en rotation.

Des synchroniseurs de ce type, simples ou doubles, sont bien connus dans l'état de la technique, un exemple de réalisation étant décrit et représenté dans le document GB-A-1.113.413.

Dans un synchroniseur de ce type à deux bagues de friction et à douille tronconique, le déplacement axial de la bague extérieure en direction du pignon provoque l'entraînement par friction de la douille.

Les synchroniseurs comportent de nombreux composants qui ne sont mis en place et ajustés fonctionnellement que lors d'une opération de montage et de réalisation du synchroniseur directement sur l'arbre moteur. Le maintien axial de l'empilage fonctionnel des différents composants est assuré au moyen de rondelles et d'anneaux élastiques qui coopèrent avec l'arbre proprement dit, avec les bagues intérieures et le moyeu. On constate de plus que les bagues intérieures sont montées coulissantes sur des cannelures extérieures du moyeu. Cette solution est particulièrement coûteuse et on constate qu'il existe des jeux axiaux notamment entre les bagues intérieures, le moyeu et l'arbre qui provoquent une perte de la course utile de coulissement du manchon de commande.

Afin de remédier à ces inconvénients, l'invention propose un synchroniseur du type mentionné plus haut, caractérisé en ce que la bague de friction intérieure est montée sur une portée du moyeu et en ce qu'il est prévu des moyens d'immobilisation axiale de la bague de friction intérieure par rapport au moyeu qui sont agencés entre ces deux éléments.

Selon d'autres caractéristiques de l'invention:
- le synchroniseur comporte des moyens de verrouillage comportant une pluralité de poussoirs radiaux à billes qui sont agencés sur le moyeu et dont les billes sont sollicitées élastiquement en direction du manchon de commande avec lequel elles coopèrent pour définir les différentes positions axiales de ce dernier ;
- le moyeu comporte, sur sa face d'extrémité tournée vers le pignon, au moins une patte de liaison qui s'étend radialement vers l'extérieur et qui pénètre dans une rainure axiale interne de la bague de friction intérieure qui est agencée en vis-à-vis pour immobiliser axialement la bague en direction du pignon par coopération de la patte avec le fond de la rainure ;
- la portée du moyeu est une portée cylindrique sur laquelle la bague intérieure est emmanchée à force ; et
- lorsque le synchroniseur est un synchroniseur double pour deux pignons montés libres en rotation sur un arbre de part et d'autre du plan médian d'un moyeu, il est constitué par deux synchroniseurs selon l'invention qui sont agencés symétriquement de part et d'autre d'un plan médian du moyeu commun aux deux synchroniseurs.

L'invention propose également un procédé de montage d'un synchroniseur dans lequel, au repos, une garde d'armement sépare axialement chaque bille d'une face active de la bague extérieure, caractérisé en ce que la bague intérieure est immobilisée sur le moyeu après avoir placé l'ensemble des deux bagues en serrant la douille en appui central sur une cale située à la place de la bille.

D'autres caractéristiques et avantages de l'invention apparaîtront à la lecture de la description détaillée qui va suivre pour la compréhension de laquelle on se reportera aux dessins annexés dans lesquels :
- La figure 1 est une vue en coupe axiale d'un synchroniseur double réalisé conformément aux enseignements de l'invention ;
- la figure 2 est une demi-vue en coupe axiale d'un synchroniseur double selon une variante de la figure 1 et sur laquelle on a représenté un premier mode de réalisation d'une cale utilisée lors des opérations d'assemblage du synchroniseur ;
- la figure 3 est une vue similaire à celle de la figure 2 dans laquelle on a représenté un second mode de réalisation de la cale d'assemblage ;
- la figure 4 est une vue en perspective illustrant les moyens d'immobilisation axiale de la bague intérieure sur le moyeu ainsi qu'un outil permettant le sertissage axial de ces moyens ;
- la figure 5 est une vue en section selon la ligne 5-5 de la figure 4 ; et
- la figure 6 est une vue similaire à celle de la figure 5 qui représente la bague intérieure et le moyeu à l'issue de l'opération de sertissage axial.

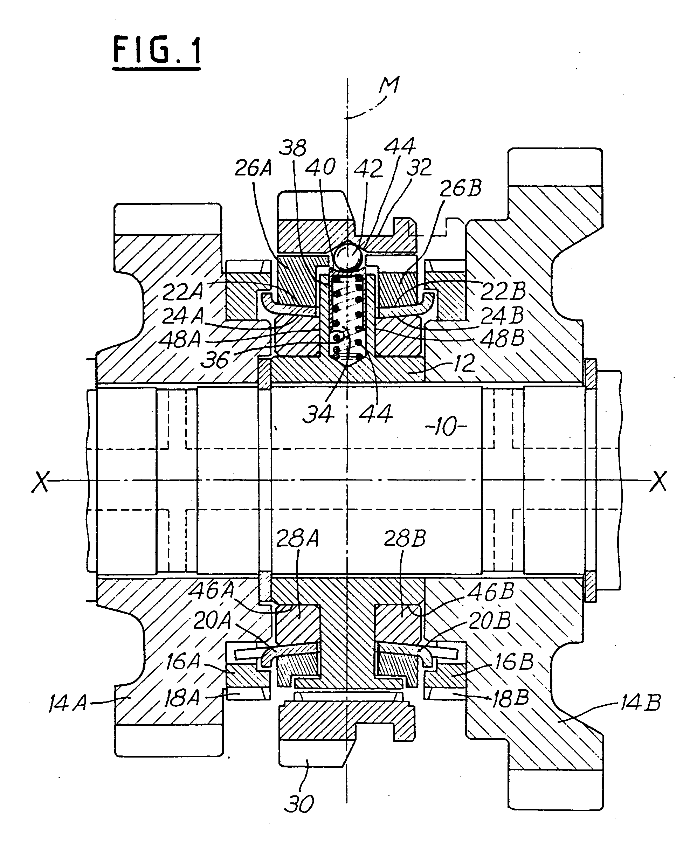

La conception du synchroniseur double représentée à la figure 1 étant globalement symétrique par rapport à son plan médian M, l'ensemble des composants relatifs à un premier synchroniseur, à gauche en considérant la figure 1, seront repérés par des chiffres de référence indicés A tandis que les composants de l'autre synchroniseur seront repérés avec les mêmes chiffres de référence indicés B.

On a représenté à la figure 1 un arbre 10 sur lequel est fixé axialement et immobilisé en rotation un moyeu 12. De part et d'autre du moyeu 12 par rapport à son plan médian M sont disposés deux pignons 14A et 14B qui sont immobilisés axialement mais libres en rotation sur l'arbre 10.

Les pignons 14A et 14B sont munis d'un prolongement axial 16A, 16B sur la périphérie desquels sont formées des dentures de crabotage 18A et 18B.

Chacun des prolongements axiaux 16A et 16B est lié en rotation à une douille tronconique coaxiale 20A, 20B dont le cône s'ouvre en direction du pignon.

Les surfaces de friction tronconiques externes 22A, 22B et internes 24A, 24B des douilles 20A et 20B sont respectivement reçues entre des bagues de friction extérieure 26A, 26B et des bagues de friction intérieure 28A et 28B. Les bagues de friction extérieure 26A et intérieure 28A sont concentriques et liées en rotation au moyeu de crabotage 12, de même que les bagues 26B et 28B.

Le synchroniseur double comporte également un manchon de commande 30 qui est susceptible d'être déplacé axialement par rapport au moyeu 12 sous l'action d'une fourchette de commande (non représentée) qui est reçue dans une rainure de fourchette 32 formée dans la surface cylindrique externe du manchon de commande 22.

Les différentes positions axiales du manchon 30 par rapport au moyeu 12 résultent de la coopération de moyens de verrouillage constitués par des poussoirs à billes 34 avec le manchon 30.

Le synchroniseur double peut par exemple comporter deux séries de trois poussoirs radiaux qui sont répartis et alternés régulièrement autour de l'axe X-X du synchroniseur. Chaque poussoir 34 est constitué d'un alésage 36 qui s'étend radialement dans une partie centrale 38 du moyeu et dans lequel est reçu un piston de poussoir 40 qui sollicite radialement vers l'extérieur une bille de verrouillage 42 au moyen d'un ressort 44.

La bille 42 repose sur un siège conique creux formé à l'extrémité libre du piston 40.

Chacune des billes 42 est reçue dans une piste axiale interne 44 formée dans la surface cylindrique interne du manchon de commande 30. La piste 44 peut comporter différents crans dont notamment le cran de centrage 44 à deux pentes opposées représenté à la figure 1 dans lequel est reçue la bille 42 lorsque le synchroniseur est dans sa position inactive.

Chacune des bagues de friction intérieure 28A, 28B est emmanchée à force sur une des portées cylindriques lisses 46A, 46B formées sur le moyeu 12 de part et d'autre de son plan médian M.

Afin de simplifier la représentation, de la figure 1, les faces radiales 48A, 48B des bagues intérieures 28A, 28B sont représentées en appui axial contre les surfaces en regard des prolongements radiaux 38 du moyeu 12.

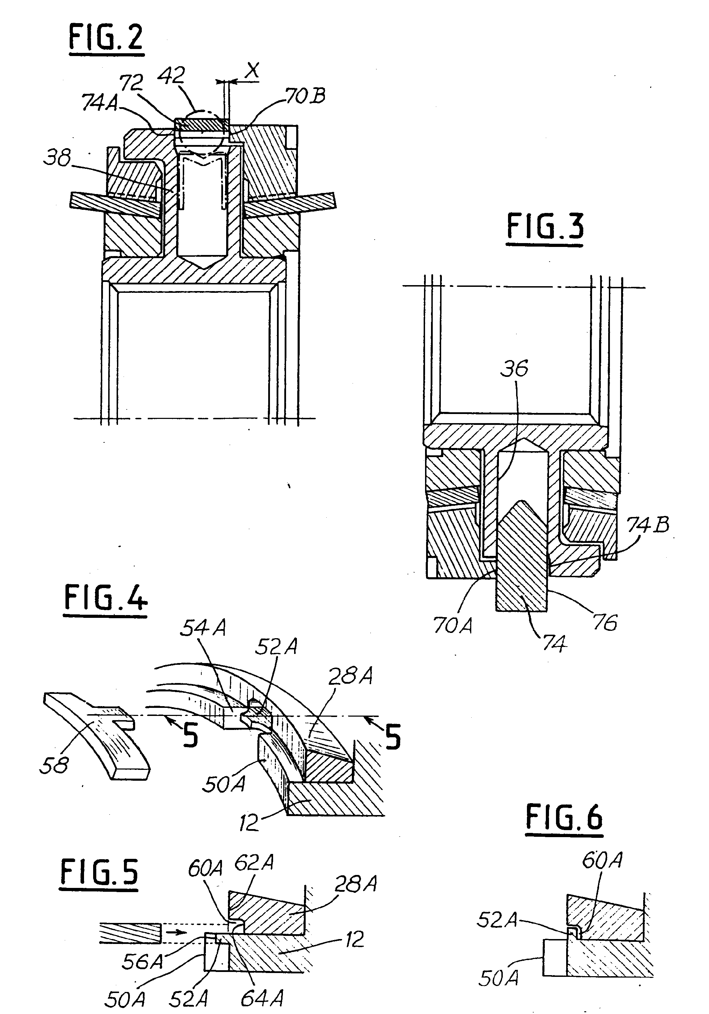

Les moyens d'immobilisation axiale des bagues intérieures 28A, 28B par rapport au moyeu 12 sur leur portée cylindrique respective 46A, 46B pour éviter qu'elles ne se déplacent en éloignement du plan médian M sont représentés aux figures 4 à 6.

L'immobilisation axiale et en rotation de la bague intérieure 28A est assurée par rivetage, ou sertissage, axial.

A cet effet, avant l'assemblage définitif du synchroniseur, la face radiale d'extrémité 50A du moyeu 12 comporte au moins une patte de rivetage 52A qui est formée à l'intérieur d'une rainure axiale 54A et dont l'extrémité 56A est en retrait par rapport à la face d'extrémité 50A. La patte 52A est, lors de l'opération finale d'assemblage, écrasée axialement au moyen d'un outil 58 de forme et de profil adaptés de façon à venir pénétrer dans une rainure axiale 60A formée dans la bague intérieure 28A et qui s'ouvre en direction de la face radiale d'extrémité 62A de celle-ci.

Après le rivetage par écrasement de la patte 52A, celle-ci est en butée contre le fond 64A de la rainure axiale 60A. On a donc réalisé une immobilisation axiale de la bague intérieure 28A par rapport au moyeu 12 en direction du pignon correspondant 14A, c'est-à-dire vers la gauche en considérant les figures 4 à 6.

Il peut bien entendu être prévu plusieurs ensembles de pattes et rainures 52A, 60A réparties angulairement autour de l'axe X-X.

De même l'invention n'est pas limitée à ce mode d'immobilisation axiale, le rivetage pouvant être remplacé par exemple par une opération de collage ou de soudage entre le moyeu et la bague intérieure. Grâce à cette conception il est possible de réaliser le synchroniseur de manière autonome indépendamment de son montage final sur l'arbre 10. De plus la conception des bagues intérieures à portées cylindriques lisses et à rainures 60A a l'avantage de n'offrir aucune partie en saillie radiale intérieure et donc de faciliter une éventuelle rectification de ces surfaces, de même que pour les surfaces de portée cylindrique 46A et 46B du moyeu 12.

Dans de tels synchroniseurs, lorsque l'ensemble est dans la position de repos, dite également de point mort, représentée aux figures, il est nécessaire d'assurer un jeu axial X (voir figure 2), entre les billes 42 et les surfaces actives de portée 70A, 70B formées sur les bagues extérieures 26A, 26B ou (fig.2 et 3) sur la partie centrale 38 du moyeu.

Le jeu axial X, qui est appelé garde d'armement du synchroniseur. doit être le plus faible possible pour réduire l'encombrement axial global du synchroniseur ainsi que la course de coulissement du manchon de commande 30 et donc celle du levier de commande de la boîte de vitesses d'un véhicule automobile lorsque de tels synchroniseurs sont incorporés à cet élément.

Le jeu axial X est habituellement tributaire des tolérances de fabrication des bagues de friction et du moyeu notamment lorsque les bagues intérieures 26A et 26B sont en appui axial contre la partie centrale 38 comme cela a été décrit et représenté à la figure 2.

Afin que la garde d'armement X soit minimale il est proposé d'utiliser des cales pour le montage et le positionnement axial précis des bagues de friction.

Dans le premier mode de réalisation représenté à la figure 2 la cale 72 est un anneau interposé entre la surface de portée 70B et une surface opposée 74A de la partie centrale 38. Dans le second mode de réalisation représenté, la cale 74 est en forme d'obus cylindrique et est agencée dans l'alésage interne 36 d'un poussoir à billes, sa surface périphérique externe 76 coopérant avec les surfaces 70A et 74B.

Grâce à la cale il est possible de positionner idéalement, avant et pendant l'immobilisation axiale de la bague intérieure sur le moyeu, les bagues extérieures. Chacune des bagues intérieures est dimensionnée axialement de façon à ne pas buter contre les faces radiales en regard de la partie centrale 38 du moyeu 12 de façon à ce que leur position axiale soit bien déterminée par l'empilage des anneaux contre la cale, cette dernière étant bien entendu retirée pour permettre le montage des billes, de leur poussoir, puis du manchon de commande.

Grâce à l'invention qui vient d'être décrite il est possible de réaliser un synchroniseur simple ou double, qui constitue un module indépendant qui est assemblé et qui présente toutes ses caractéristiques dimensionnelles et fonctionnelles en dehors de son montage sur un arbre. Ce module constitue avantageusement une pièce de rechange autonome particulièrement aisée à utiliser pour le remplacement d'un synchroniseur défecteux. Toutes les surfaces fonctionnelles sont protégées des agressions extérieures et notamment des chocs. Les principaux efforts sont transmis et repris à l'intérieur du synchroniseur lui-même ce qui évite toute perte de course de commande et améliore donc l'efficacité fonctionnelle du synchroniseur.

L'invention n'est bien entendu pas limitée aux modes de réalisation qui viennent d'être décrits, les moyens d'immobilisation axiale des bagues intérieures sur le moyeu pouvant par exemple consister en une opération de collage, de soudage etc.

## Revendications

1. Synchroniseur pour un pignon (14A) monté libre en rotation sur un arbre (10) et auquel est liée en rotation une douille (20A) tronconique coaxiale dont les surfaces tronconiques externe (22A) et interne (24A) sont respectivement reçues entre une bague de friction extérieure (26A) et une bague de friction intérieure (28A) concentriques et liées en rotation à un moyeu de crabotage (12) fixé à l'arbre (10) et sur lequel est monté coulissant axialement un manchon de commande (30) susceptible de coopérer avec la bague de friction extérieure (26A) pour la déplacer axialement par rapport à la bague de friction intérieure (28A) de manière à pincer la douille (20A) pour entraîner cette dernière en rotation, caractérisé en ce que la bague de friction intérieure (28A) est montée sur une portée (46A) du moyeu (12) et en ce qu'il est prévu des moyens d'immobilisation axiale de la bague de friction intérieure (28A) par rapport au moyeu (12) qui sont agencés entre ces deux éléments.

2. Synchroniseur selon la revendication 1, caractérisé en ce qu'il comporte des moyens de verrouillage comportant une pluralité de poussoirs radiaux à billes (34-42) qui sont agencés sur le moyeu (12) et dont les billes (42) sont sollicitées élastiquement en direction du manchon de commande (30) avec lequel elles coopèrent pour définir les différentes positions axiales de ce dernier.

3. Synchroniseur selon l'une des revendications 1 ou 2, caractérisé en ce que le moyeu (12) comporte, sur sa face d'extrémité (50A) tournée vers le pignon (14A), au moins une patte de liaison (52A) qui s'étend radialement vers l'extérieur et qui pénètre dans une rainure axiale interne (60A) de la bague de friction intérieure (26A) qui est agencée en vis-à-vis pour immobiliser axialement la bague en direction du pignon par coopération de la patte (52A) avec le fond (64A) de la rainure axiale (60A).

4. Synchroniseur selon l'une quelconque des revendications précédentes, caractérisé en ce que la portée (46A) du moyeu (12) est une portée cylindrique sur laquelle la bague intérieure (26A) est emmanchée à force.

5. Synchroniseur double pour deux pignons (14A, 14B) montés libres en rotation sur un arbre (10) de part et d'autre d'un moyeu (12), caractérisé en ce qu'il comprend deux synchroniseurs selon l'une quelconque des revendications précédentes agencés symétriquement de part et d'autre d'un plan médian (M) du moyeu (12) commun aux deux synchroniseurs.

6. Procédé de montage d'un synchroniseur selon l'une quelconque des revendications 2 à 5 dans lequel, au repos, une garde d'armement (X) sépare axialement chaque bille (42) d'une face active (70B) de la bague extérieure (26B), caractérisé en ce que la bague intérieure (28B) est immobilisée sur le moyeu (12) après avoir placé l'ensemble des deux bagues enserrant la douille (20B) en appui axial sur une cale (42, 74) située à la place de la bille.

## Patentansprüche

1. Synchronisator für ein Ritzel (14A), das frei drehbar auf einer Welle (10) angebracht ist und das drehfest mit einer koaxialen, kegelstumpfförmigen Büchse (20A) verbunden ist, deren äußere (22A) und innere (24A) kegelstumpfförmige Oberfläche jeweils zwischen einem äußeren Reibring (26A) und einem inneren Reibring (28A) aufgenommen sind, welche konzentrisch und drehfest mit einer Klauenkupplungsnabe (12) verbunden sind, die an der Welle (10) befestigt ist und auf der eine Betätigungsmuffe (30) axial gleitend angebracht ist, die mit dem äußeren Reibring (26A) diesen bezüglich des inneren Reibringes (28A) axial verschiebend derart zusammenwirken kann, daß die Büchse (20A) geklemmt und mitgedreht wird, dadurch gekennzeichnet, daß der innere Reibring (28A) auf einer Auflagefläche (46A) der Nabe angebracht ist, und daß Mittel zur axialen Festlegung des inneren Reibrings (28A) bezüglich der Nabe (12) vorgesehen sind, die zwischen diesen beiden Elementen eingerichtet sind.

2. Synchronisator nach Anspruch 1, dadurch gekennzeichnet, daß er Verriegelungsmittel aufweist, die eine Anzahl von radialen Kugelstößeln (34 - 42) aufweisen, die auf der Nabe (12) angeordnet sind und deren Kugeln (42) elastisch in Richtung der Betätigungsmuffe (30) belastet sind, mit der sie zur Bestimmung der verschiedenen axialen Stellungen dieser Betätigungsmuffe (30) zusammenwirken.

3. Synchronisator nach einem der Ansprüche 1 oder 2, dadurch gekennzeichnet, daß die Nabe (12) auf ihrer dem Ritzel (14A) zugekehrten Endfläche (50A) mindestens einen Verbindungslappen (52A) aufweist, der sich radial nach außen erstreckt und der in eine gegenüberliegend angeordnete innere axiale Nut (60A) des inneren Reibringes (26A) zur axialen Festlegung des Ringes in Richtung des Ritzels durch Zusammenwirken des Lappens (52A) mit dem Boden (64A) der axialen Nut (60A) eingreift.

4. Synchronisator nach irgendeinem der vorstehenden Ansprüche, dadurch gekennzeichnet, daß die Auflagefläche (56A) der Nabe (12) eine zylindrische Auflagefläche ist, auf der der innere Ring (26A) aufgepreßt ist.

5. Doppelsynchronisator für zwei Ritzel (14A, 14B), die zu beiden Seiten einer Nabe (12) frei drehbar auf einer Welle (10) angebracht sind, dadurch gekennzeichnet, daß er zwei Synchronisatoren gemäß irgendeinem der vorstehenden Ansprüche aufweist, die symmetrisch zu beiden Seiten einer Mittelebene (M) der den beiden Synchronisatoren gemeinsamen Nabe (12) angeordnet sind.

6. Verfahren zur Montage eines Synchronisators nach einem der Ansprüche 2 bis 5, wobei in Ruhestellung ein axiales Spiel bzw. Schutzabstand (X) jede Kugel (42) axial von einer aktiven Fläche des äußeren Rings (26B) trennt, dadurch gekennzeichnet, daß der innere Ring (28B) auf der Nabe (12) festgelegt wird, nachdem der die Büchse (20B) umgreifende Aufbau aus den beiden Ringen in axiale Auflage auf ein Füllstück (42, 74), welches an der Stelle der Kugel angeordnet ist, gebracht ist.

## Claims

1. Synchronizer for a pinion (14A) mounted freely rotatably on a shaft (10) and to which there is rotatably connected a coaxial frustoconical bushing (20A) whereof the external (22A) and internal (24A) frustoconical surfaces are respectively received between an outer friction ring (26A) and an inner friction ring (28A) which are concentric and rotatably connected to a claw coupling boss (12) which is fixed to the shaft (10) and on which there is axially slidably mounted a control sleeve (30) which is able to cooperate with the outer friction ring (26A) in order to displace it axially with respect to the inner friction ring (28A) so as to clamp the bushing (20A) in order to rotate it, characterized in that the inner friction ring (28A) is mounted on a bearing surface (46A) of the boss (12), and in that it is provided with means for the axial immobilization of the inner friction ring (28A) with respect to the boss (12) which are arranged between these two elements.

2. Synchronizer according to Claim 1, characterized in that it has locking means having a plurality of radial thrust ball bearings (34-42) which are arranged on the boss (12) and whereof the balls (42) are urged resiliently in the direction of the control sleeve (30) with which they cooperate in order to define the different axial positions of the latter.

3. Synchronizer according to one of Claims 1 or 2, characterized in that the boss (12) has, on its end face (50A) facing the pinion (14A), at least one connection lug (52A) which extends radially outwardly and which penetrates into an internal axial groove (60A) of the inner friction ring (26A) which is arranged opposite in order to axially immobilize the ring in the direction of the pinion by cooperation of the lug (52A) with the base (64A) of the axial groove (60A).

4. Synchronizer according to any one of the preceding claims, characterized in that the bearing surface (46A) of the boss (12) is a cylindrical bearing surface onto which the inner ring (26A) is forcibly fitted.

5. Double synchronizer for two pinions (14A, 14B) mounted freely rotatably on a shaft (10) on either side of a boss (12), characterized in that it comprises two synchronizers according to any one of the preceding claims arranged symmetrically on either side of a centre plane (M) of the boss (12) common to the two synchronizers.

6. Method of mounting a synchronizer according to any one of Claims 2 to 5, in which, when at rest, a fitment clearance (X) axially separates each ball (42) from an active face (70B) of the outer ring (26B), characterized in that the inner ring (28B) is immobilized on the boss (12) after having positioned the combined unit of the two rings clamping the bushing (20B) so that they bear axially against a block (42, 74) located at the position of the ball.

# FIG.1

FIG.2

FIG.3

FIG.4

FIG.5

FIG.6